# EUROPÄISCHE PATENTANMELDUNG

(11) **EP 2 333 391 A2**
(43) Veröffentlichungstag der Anmeldung: **15.06.2011**
(21) Anmeldenummer: 10193930.4
(22) Anmeldetag: 07.12.2010
(51) Int. Cl.: F16L 23/18, F16L 27/02

(54) **Kupplungsvorrichtung für Rohre**

(30) Priorität: 09.12.2009 DE 102009047707
(71) Anmelder: Putzmeister Engineering GmbH, 72631 Aichtal (DE)
(72) Erfinder: Renz, Jörg, 70794, Filderstadt (DE); Mäckle, Raimund, 73730, Esslingen (DE); Westermann, Karl, 72141, Walddorfhäslach (DE)
(74) Vertreter: Wolf, Eckhard

(57) **Zusammenfassung**

Die Erfindung bezieht sich auf eine Vorrichtung zum Kuppeln zweier Rohre (12), die zur Druckförderung von Dickstoffen, wie Beton, bestimmt sind. Die Rohre (12) weisen an ihren Enden im Wesentlichen radial überstehende Bunde (14,16) sowie ein zwischen den Bunden angeordnetes umlaufendes Dichtelement (18) aus elastischem Material auf. Die Bunde (14,16) sind mit dem zwischenliegenden Dichtelement (18) mittels einer lösbaren Spannvorrichtung (20) unter Bildung einer fluiddichten Verbindung gegeneinander verspannt. Zwischen den beiden Bunden (14,16) verbleibt ein durch das Dichtelement (18) überbrückter veränderlicher Axialspalt (22). Außerdem weist einer der Bunde (14) eine zur Rohrachse konzentrische, zum anderen Bund (16) hin offene Ringnut (24) auf, in welche das Dichtelement (18) eingreift. Der Axialspalt ist zusätzlich durch mindestens einen Stützring (32) überbrückt, der gegen eine umlaufende berflächenpartie (36) des Dichtelements anliegt. Mit den erfindungsgemäßen Maßnahmen wird erreicht, dass ein Größtmaß an Dichtheit und Beweglichkeit im Kupplungsbereich ermöglicht wird, ohne dass die vor allem bei Autobetonpumpen nötige Austauschbarkeit der einzelnen Rohre behindert wird.

## Beschreibung

Die Erfindung betrifft eine Vorrichtung zum Kuppeln zweier Rohre zur Druckförderung von Fluiden, insbesondere von Dickstoffen wie Beton nach der im berbegriff des Patentanspruchs 1 angegebenen Gattung.

Vorrichtungen dieser Art weisen an den einander zugewandten Rohrenden im wesentlichen radial überstehende Bunde sowie ein zwischen den Bunden angeordnetes umlaufendes Dichtelement aus elastomerem Material auf, wobei die Bunde mit dem zwischenliegenden Dichtelement mittels einer lösbaren Spannvorrichtung unter Bildung einer fluiddichten Verbindung gegeneinander verspannt sind. Das Dichtelement ist dort zwischen den Bunden der Rohre untergebracht und stützt sich bei Druckbelastung an den Bunden ab. Für solche Systeme werden meist O-Ringe als Dichtelement verwendet. Die O-Ring-Dichtung zeichnet sich bei korrekter Verwendung durch eine hohe Dichtigkeit und Belastbarkeit unter Druck aus. Allerdings besteht die Gefahr, dass die O-Ringe unter der Einwirkung von Druck durch einen zwischen den Bunden befindlichen Spalt hindurch extrudiert werden. Um diese Gefahr zu vermeiden, muss der abzudichtende Spalt zwischen den Rohrbunden sehr klein sein, was andererseits für die Beweglichkeit der Förderleitung nachteilig ist. Um den Spalt so klein wie möglich zu halten, besitzen die Rohrbunde und die Innenkontur der Spannvorrichtung einen trapezförmigen Querschnitt. Beim Aufschieben der Kupplung auf die Bunde gewährleistet diese Kontur, dass die Bunde der Rohre exakt aneinander gepresst werden, in dem Sinne, dass der Spalt minimiert wird. Dazu ist es allerdings erforderlich, dass die beiden upplungsschalen der Spannvorrichtung im montierten Zustand an ihrer Trennfläche nicht unmittelbar aneinander liegen, sondern dass ein Zwischenraum zwischen den beiden Schalenhälften verbleibt. Durch die Klemmung ist eine Abwinklung der beiden miteinander verbundenen Rohre nicht möglich. Die Klemmung macht es zudem unmöglich, die Rohre über die Kupplungsschalen zu zentrieren, um einen Versatz zwischen den beiden Rohrlängsachsen zu vermeiden. Um hiergegen Abhilfe zu schaffen und die Rohre zu zentrieren, wurde bereits vorgeschlagen, dass sich die Rohrbunde in radialer Richtung überlappen, also mit axialen Vorsprüngen und Ausnehmungen ineinander greifen. Diese Überlappung behindert andererseits den Ausbau eines einzelnen Rohrs aus einer bestehenden Förderleitung, wenn die beidseitig angeschlossenen Rohre nicht axial um das Maß des Ineinandergeifens verschoben werden können.

Ausgehend hiervon liegt der Erfindung die Aufgabe zugrunde, eine Kupplungsvorrichtung der eingangs angegebenen Art zu entwickeln, die ein Größtmaß an Dichtheit und Beweglichkeit im Kupplungsbereich ermöglicht, ohne dass die vor allem bei Autobetonpumpen nötige Ausbaubarkeit der einzelnen Rohre behindert wird.

Zur Lösung dieser Aufgabe werden die im Patentanspruch 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung besteht im Wesentlichen darin, dass zwischen den beiden Bunden im verspannten Zustand ein überlappungsfreier, durch das Dichtelement überbrückter veränderlicher Axialspalt verbleibt, dass einer der Bunde eine zur Rohrachse konzentrische, zum anderen Bund hin offene Ringnut aufweist, in welche das Dichtelement eingrei und dort am Nutengrund und an mindestens einer utenflanke anliegt, und dass der Axialspalt zusätzlich durch einen Stützring überbrückt ist, der mit einer umlaufenden Begrenzungsfläche gegen einen umlaufenden Oberflächenbereich des Dichtelements anliegt.

Vorteilhafterweise ist der Axialspalt auf der radial innen liegenden Seite des Dichtelements zusätzlich durch einen Schutzring überbrückt, der mit einer umlaufenden Begrenzungsfläche gegen einen umlaufenden Oberflächenbereich des Dichtelements anliegt.

Eine bevorzugte Ausgestaltung der Erfindung sieht vor, dass die Außenseiten der Bunde unter Ausbildung von Keilflächen angeschrägt sind, und dass die Spannvorrichtung den Keilflächen entsprechend angeschrägte Gegenflächen aufweist, wobei die Spannvorrichtung beide Bunde über ihren Umfang übergreift und die Keilflächen gegen die Gegenflächen unter dem Einfluss der in Umfangsrichtung gespannten Spannvorrichtung kraftschlüssig anliegen. Mit anderen Worten bedeutet dies, dass die beiden Bunde einen trapezförmigen Querschnitt bilden, der genau der Innenkontur der die Spannvorrichtung bildenden Kupplungsschalen entspricht. Vorteilhafterweise wird der Flankenwinkel (Keilwinkel) dabei so steil gewählt, dass das Dichtelement bei der Montage ausreichend verpresst wird. Andererseits sollte der Flankenwinkel (Keilwinkel) aber so klein sein, dass eine Selbsthemmung auftritt, die dafür sorgt, dass die Kupplungsschalon der Spannvorrichtung bei offenem Verschluss nicht von den Bunden abheben. Die Kupplungsschalen der Spannvorrichtung sind an ihrer Innenseite in radialer Richtung so gestaltet, dass sie die beiden Rohrbunde zentriert. Dabei müssen die Kupplungsschalen an ihrer Trennstelle nicht zwingend aneinander liegen. Die Zentrierung über die Kupplung macht eine Zentrierung über die Bunde entbehrlich, weshalb auf eine Überlappung in axialer Richtung verzichtet werden kann.

Der erfindungsgemäße Stützring sorgt dafür, dass der Axialspalt zwischen den beiden Bunden überbrückt wird, so dass das ringförmige Dichtelement nicht radial nach außen herausgedrückt werden kann. Weiter sorgt der erfindungsgemäße Schutzring dafür, dass der Axialspalt im Bereich des Dichtelements nicht vom Rohrinneren her mit dem Fluid (z.B. Beton) verunreinigt und dadurch beschädigt wird. Das Dichtelement einerseits und der Stützring bzw. Schutzring andererseits müssen dabei nicht miteinander verbunden sein. Dennoch erleichtert eine form- oder stoffschlüssige Verbindung der beiden Elemente die Montage und Demontage.

Eine vorteilhafte Ausführungsvariante der Erfindung besteht darin, dass der bevorzugt aus Stahl oder aus Kunststoff bestehende Stützring oder Schutzring einen L-förmigen Querschnitt aufweist und dass der Stützring oder Schutzring unter Bildung eines Verbundelements mit dem elastischen Dichtelement unlösbar verbunden ist.

Der Stützring oder der Schutzring kann auch eine andere Kontur, wie beispielsweise einen rechteckigen Querschnitt aufweisen.

Zur Unterbringung des Dichtelements und des Stützrings ist in einem der Bunde eine Ringnut angeordnet, die zweckmäßig einen trapezförmigen Querschnitt mit einer Schräge zur Rohrmitte hin aufweist. Die Ringnut ist dabei so dimensioniert, dass sie bei maximaler Verpressung von dem verformten Dichtelement ausgefüllt wird. Dadurch wird erreicht, dass bei den während des Pumpvorgangs stets auftretenden Bewegungen der Leitung in die Ringnut eingedrungener Frischbeton aus dieser herausgepresst wird, so dass Schäden am Dichtelement durch ausgehärteten Beton vermieden werden.

Mit den erfindungsgemäßen Maßnahmen wird erreicht, dass der Axialspalt nach Maßgabe der Spannkraft und/oder der gegenseitigen Ausrichtung der miteinander gekuppelten Rohre eine variable Spaltweite aufweisen kann. Die maximale Spaltweite kann dabei bis zu 40 % des Durchmessers oder der Querabmessung des Dichtelements betragen. Mit anderen Worten bedeutet dies, dass die maximale Spaltweite im gekuppelten Zustand bis zu 1/3 der Ringnuttiefe aufweisen kann. Die Spaltmaße sind also relativ groß, so dass im Kupplungsbereich zwischen den Rohren eine hohe Beweglichkeit besteht, die sowohl ein gewisses Abwinkeln der beiden Rohre gegenüber ihren Längsachsen als auch ein gegenseitiges Verdrehen um ihre Längsachsen erlaubt. Dabei ist zu berücksichtigen, dass der Axialspalt radial durchgehend, also überlappungsfrei ist, so dass sich die Rohre durch Lösen der Kupplung relativ einfach trennen und austauschen lassen.

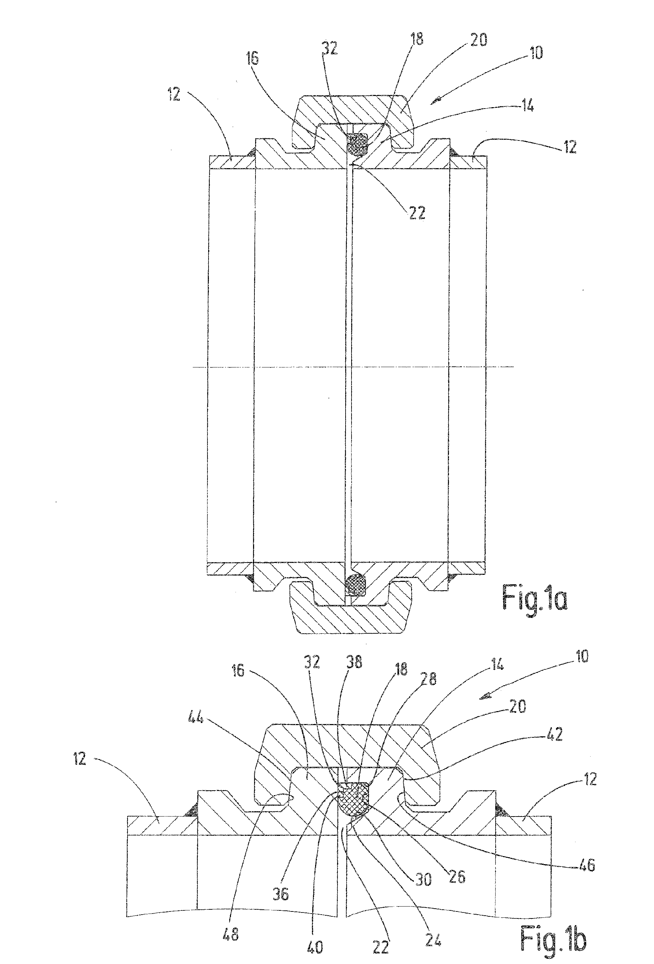

Im Folgenden wird die Erfindung anhand der in der Zeichnung in schematischer Weise dargestellten Ausführungsbeispiele näher erläutert. Es zeigen
- Fig. 1 a: einen Ausbruch aus einer Förderleitung im Bereich der Kupplungsvorrichtung in axial geschnittener Darstellung;
- Fig. 1 b: einen vergrößerten Ausschnitt aus Fig 1 a;
- Fig. 2a: und 2b zwei Darstellungen entsprechend Fig. 1 a für weitere Ausführungsbeispiele;
- Fig. 3: ein Verbundelement bestehend aus Dichtelement und Stützring in radial geschnittener Darstellung;
- Fig. 4: ein gegenüber Fig. 3 abgewandeltes Ausführungsbeispiel eines Verbundelements bestehend aus Dichtelement, Stützring und zusätzlichem Schutzring;
- Fig. 5: eine Darstellung entsprechend Fig. 3 für ein abgewandeltes Ausführungsbeispiel;
- Fig. 6: eine Darstellung entsprechend Fig. 4 für ein abgewandeltes Ausführungsbeispiel;
- Fig. 7a: und b einen Ausbruch aus einer Förderleitung im Bereich der Kupplungsvorrichtung in axial geschnittener Darstellung mit fluchenden und gegeneinander abgewinkelten Rohrachsen;
- Fig. 8: einen Ausbruch aus der Förderleitung im Kupplungsbereich in schaubildlicher Darstellung zur Veranschaulichung der gegenseitigen Verdrehbarkeit der Rohre im gekuppelten Zustand.

Die in der Zeichnung dargestellte Kupplungsvorrichtung 10 ist zur Vereindung zweier Rohre 12 einer Druckförderleitung für Dickstoffe bestimmt. Die Rohre 12 weisen an ihren einander zugewandten Enden je einen vorzugsweise angeschweißten, radial überstehenden Bund 14,16 auf, die in der Zeichnung in gegeneinander verspanntem Zustand dargestellt sind. Zwischen den Bunden 14,16 ist ein umlaufendes Dichtelement 18 aus elastischem, vorzugsweise elastomerem Material angeordnet. Außerdem sind die Bunde 14,16 mit dem zwischenliegenden Dichtelement 18 mittels einer lösbaren Spannvorrichtung 20 unter Bildung einer fluiddichten Verbindung gegeneinander verspannt.

Eine Besonderheit der Erfindung besteht darin, dass zwischen den beiden Bunden 14,16 ein radial durchgehender, also überlappungsfreier Axialspalt 22 verbleibt, der in verspanntem Zustand der Kupplungsvorrichtung durch das Dichtelement 18 überbrückt ist. Der auch als Mutterbund bezeichnete Bund 14 weist eine zum anderen, als Vaterbund bezeichneten Bund 16 hin offene Ringnut 24 auf, in welche das Dichtelement 18 eingreift und dort am Nutengrund 26 und an der radial äußeren Nutenflanke 28 anliegt. Wie insbesondere aus Fig. 1b zu ersehen ist, weist die Ringnut 24 bei dem Ausführungsbeispiel nach Fig. 1 a und b einen trapezförmigen Querschnitt auf, dessen radial innere Nutenflanke 30 eine zur Rohrmitte gerichtete Schräge aufweist. Die Ringnut 24 ist dabei so dimensioniert, dass sie bei maximaler Verpressung von dem verformten Dichtelement 18 ausgefüllt wird.

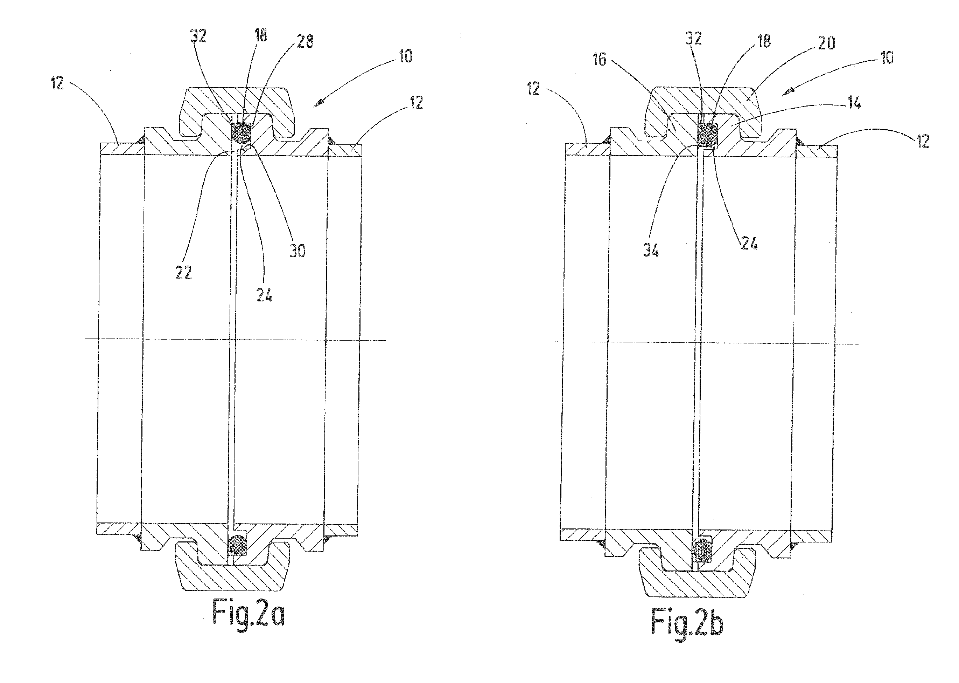

Das in Fig. 2a gezeigte Ausführungsbeispiel unterscheidet sich von dem Ausführungsbeispiel nach Fig. 1a lediglich dadurch, dass die Ringnut 24 einen rechteckigen Querschnitt aufweist. Die innere Nutenflanke 30 ist hier wie die äußere Nutenflanke 28 axial ausgerichtet.

Eine weitere Besonderheit der Erfindung besteht darin, dass der Axialspalt 22 zusätzlich durch einen Stützring 32, vorzugsweise aus metallischem Werkstoff oder aus Kunststoff überbrückt ist. Bei den in Fig. 1a, 2a, 3 und 5 gezeigten Ausführungsbeispielen ist nur ein Stützring 32 vorgesehen, der den Axialspalt 22 radial nach außen hin überbrückt. Der Stützring 32 sorgt dafür, dass der Axialspalt 22 zwischen den beiden Bunden 14,16 so überbrückt wird, dass das ringförmige Dichtelement 18 nicht nach außen herausgedrückt werden kann.

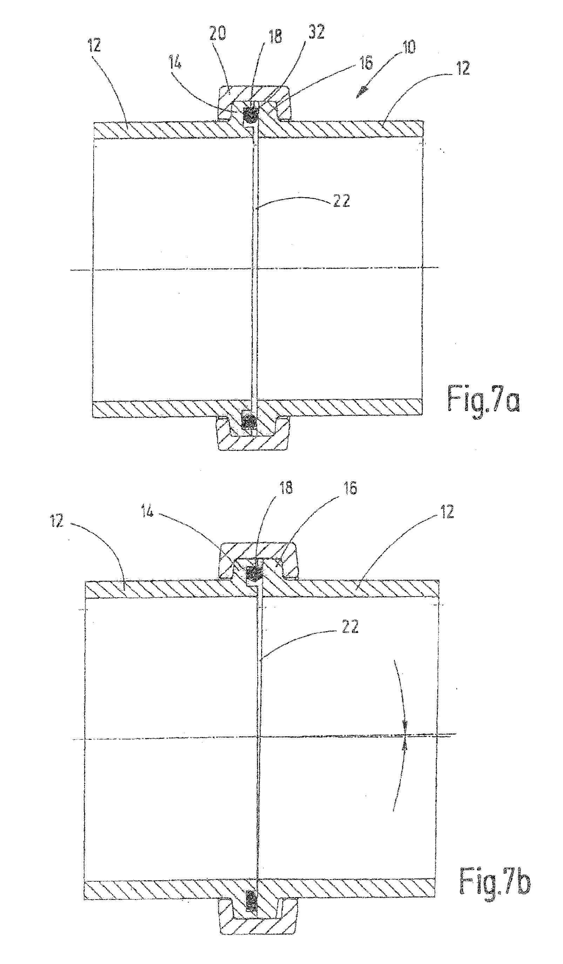

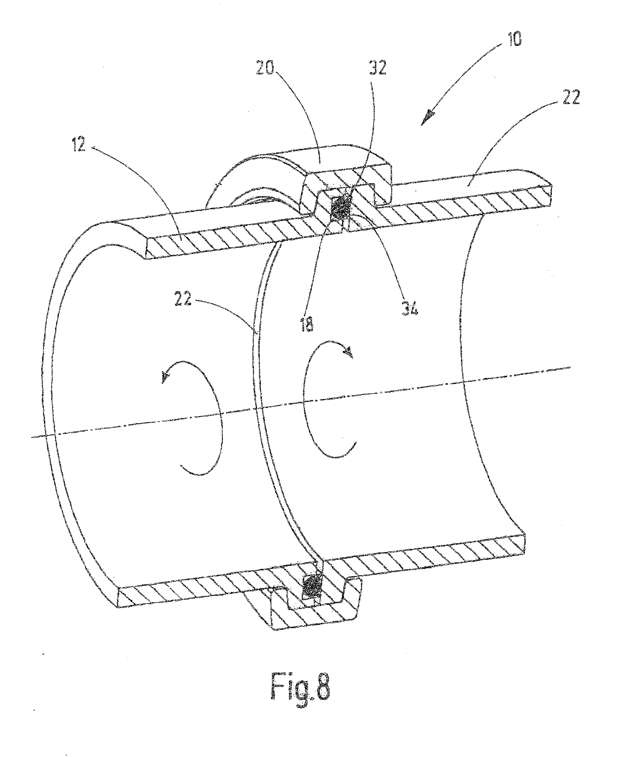

Mit diesen Maßnahmen wird erreicht, dass der Axialspalt nach Maßgabe der Spannkraft und/oder der gegenseitigen Ausrichtung der miteinander gekuppelten Rohre eine variable Spaltweite aufweisen kann. Die maximale Spaltweite kann dabei bis zu 40 % des Durchmessers oder der Querabmessung des Dichtelements 18 betragen. Die Spaltmaße sind also relativ groß, so dass im Kupplungsbereich zwischen den Rohren 18 eine hohe Beweglichkeit besteht, die sowohl ein gewisses Abwinkeln der beiden Rohre gegenüber ihren Längsachsen (vgl. Fig. 7b) als auch ein gegenseitiges Verdrehen um ihre Längsachsen (vgl. Fig. 8) erlaubt.

Bei den Ausführungsbeispielen nach Fig. 2b, 4 und 6 ist zusätzlich ein Schutzring 34 vorgesehen, der gegen die umlaufende berflächenpartie 36' des Dichtelements anliegt. Der Schutzring 34 hat die Funktion, den Axialspalt 22 im Bereich des Dichtelements 18 vor dem Zutritt von Beton aus dem Rohrinneren zu schützen.

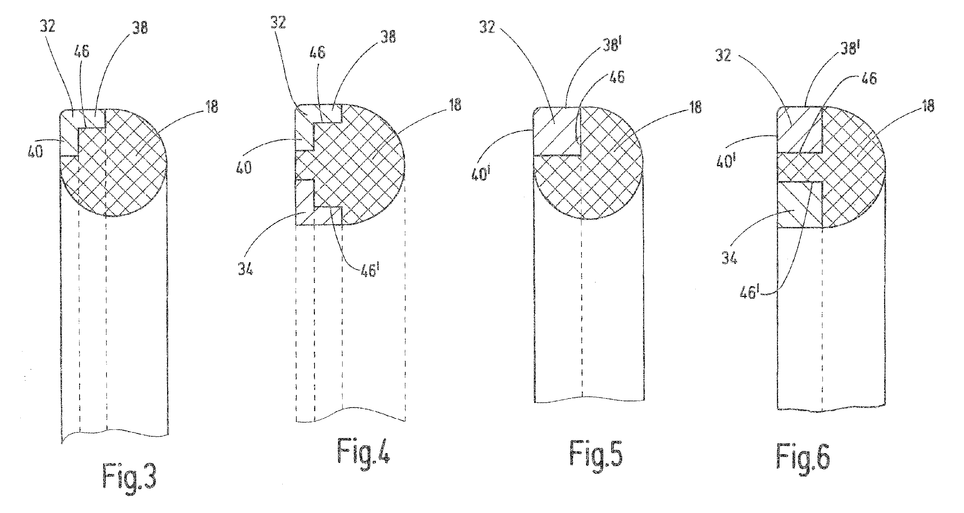

Die umlaufenden Oberflächenpartien 36,36' des Dichtelements 18 weisen eine an die Form des Stützrings 32 und des Schutzrings 34 angepasste Kontur auf, in die der Stützring 32 bzw. Schutzring 34 formschlüssig eingebettet ist. Eine bevorzugte Ausgestaltung der Erfindung sieht vor, dass der Stützring 32 oder der Schutzring 34 stoffschlüssig mit dem Dichtelement verbunden, vorzugsweise auf dieses aufvulkanisiert ist. Von besonderem Vorteil ist es, wenn der Stützring 32 und der Schutzring 34 entsprechend Fig. 1a, 1b, 2a, 2b, 3 und 4 einen L-förmigen Querschnitt aufweisen, dessen einer im montierten Zustand axial ausgerichteter L-Schenkel 38 von der Ringnut 34 des einen Bundes 14 aus den Axialspalt 22 überbrückt und dessen anderer, radial ausgerichteter L-Schenkel 40 mit seiner Außenfläche gegen den anderen Bund 16 anliegt. Grundsätzlich können der Stützring 32 oder der Schutzring 34 auch eine abgewandelte Querschnittsform, beispielsweise eine Rechteckform aufweisen, deren freie Außenflächen 38',40' die vorstehend für den L-förmigen Querschnitt beschriebenen Funktionen erfüllen (vgl. Fig. 5 und 6).

Aus Fig. 2 ist zu ersehen, dass die Außenseiten der Bunde 14,16 unter Bildung von Keilflächen 42,44 angeschrägt sind und dass die Spannvorrichtung 20 den Keilflächen entsprechend angeschrägte Gegenflächen 46,48 aufweist. Die Spannvorrichtung übergreift die beiden Bunde 14,16 über ihren Umfang, so dass ihre Gegenflächen 46,48 unter dem Einfluss der in Umfangsrichtung gespannten Spannvorrichtung kraftschlüssig gegen die Keilflächen 42,44 anliegen. Mit anderen Worten bedeutet dies, dass die beiden Bunde im gefügten Zustand einen trapezförmigen Außenquerschnitt bilden, der genau der Innenkontur der die Spannvorrichtung 20 bildenden Kupplungsschalen entspricht. Die Kupplungsschalen der Spannvorrichtung 20 sind so gestaltet, dass sie die beiden Bunde 14,16 zentriert. Die Zentrierung über die Spannvorrichtung 20 macht eine zusätzliche Zentrierung über die Bunde entbehrlich.

Zusammenfassend ist folgendes festzuhalten: Die Erfindung bezieht sich auf eine Vorrichtung zum Kuppeln zweier Rohre 12, die zur Druckförderung von Dickstoffen, wie Beton, bestimmt sind. Die Rohre 12 weisen an ihren Enden im Wesentlichen radial überstehende Bunde 14,16 sowie ein zwischen den Bunden angeordnetes umlaufendes Dichtelement 18 aus elastischem Material auf. Die Bunde 14,16 sind mit dem zwischenliegenden Dichtelement 18 mittels einer lösbaren Spannvorrichtung 20 unter Bildung einer fluiddichten Verbindung gegeneinander verspannt. Zwischen den beiden Bunden 14,16 verbleibt ein durch das Dichtelement 18 überbrückter, in seiner Weite veränderlicher Axialspalt 22. Außerdem weist einer der Bunde 14 eine zur Rohrachse konzentrische, zum anderen Bund 16 hin offene Ringnut 24 auf, in welche das Dichtelement 18 eingreift. Der Axialspalt 22 ist zusätzlich durch einen Stützring 32 überbrückt, der gegen eine umlaufende Oberflächenpartie 36 des Dichtelements 18 anliegt. Mit den erfindungsgemäßen Maßnahmen wird erreicht, dass ein Größtmaß an Dichtheit und Beweglichkeit im Kupplungsbereich ermöglicht wird, ohne dass die vor allem bei Autobetonpumpen nötige Austauschbarkeit der einzelnen Rohre 12 behindert wird.

### Bezugszeichenliste:

- 10: Kupplungsvorrichtung
- 12: Rohre
- 14,16: Bunde
- 18: Dichtelement
- 20: Spannvorrichtung
- 22: Axialspalt
- 24: Ringnut
- 26: Nutengrund
- 28,30: Nutenflanken
- 32: Stützring
- 34: Schutzring
- 36,36': Oberflächenpartien
- 38,40: L-Schenkel
- 38',40': Außenflächen
- 42,44: Keilflächen
- 46,48: Gegenflächen

## Patentansprüche

1. Vorrichtung zum Kuppeln zweier Rohre (12) zur Druckförderung von Fluiden, insbesondere von Dickstoffen wie Beton, mit an den einander zugewandten Rohrenden im wesentlichen radial überstehenden Bunden (14,16), mit einem zwischen den Bunden (14,16) angeordneten umlaufenden Dichtelement (18) aus elastischem Material, wobei die Bunde (14,16) mit dem zwischenliegenden Dichtelement (18) mittels einer lösbaren Spannvorrichtung (20) unter Bildung einer fluiddichten Verbindung gegeneinander verspannt sind, **dadurch gekennzeichnet, dass** zwischen den beiden Bunden (14,16) in verspanntem Zustand ein durch das Dichtelement (18) überbrückter Axialspalt (22) verbleibt, dass einer der Bunde (14) eine zur Rohrachse konzentrische, zum anderen Bund (16) hin offene Ringnut (24) aufweist, in welche das Dichtelement (18) eingreift und dort am Nutengrund (26) und an einer Nutenflanke (28) anliegt, und dass der Axialspalt zusätzlich durch einen Stützring (32) überbrückt ist, der gegen eine umlaufende berflächenpartie (36) des Dichtelements (18) anliegt.

2. Vorrichtung nach Anspruch 1, dadurch dass das Dichtelement (18) als O-Ring ausgebildet ist.

3. Vorrichtung nach Anspruch 1 oder 2, **dadurch gekennzeichnet, dass** der Axialspalt zusätzlich durch einen Schutzring (34) überbrückt ist, der gegen eine umlaufende Oberflächenpartie (36') des Dichtelements (18) anliegt.

4. Vorrichtung nach Anspruch 3, **dadurch gekennzeichnet, dass** der Stützring (32) an einer radial außen liegenden umlaufenden Oberflächenpartie (36) des Dichtelements (18) anliegt, während der Schutzring (34) an einer radial innen liegenden Oberflächenpartie (36') des Dichtelements (18) anliegt.

5. Vorrichtung nach einem der Ansprüche 1 bis 4, **dadurch gekennzeichnet, dass** der Stützring (32) oder der Schutzring (34) formschlüssig und/oder stoffschlüssig mit dem Dichtelement (18) verbunden ist.

6. Vorrichtung nach einem der Ansprüche 1 bis 5, **dadurch gekennzeichnet, dass** die umlaufende berflächenpartie (36,36') des Dichtelements (18) eine an die Form des Stützrings (32) oder des Schutzrings (34) angepasste Kontur aufweist, in die der Stützring (32) oder Schutzring (34) formschlüssig eingebettet ist.

7. Vorrichtung nach einem der Ansprüche 1 bis 6, **dadurch gekennzeichnet, dass** der Stützring oder der Schutzring einen L-förmigen Querschnitt aufweist, dessen einer L-Schenkel (38) von der Ringnut (24) des einen Bundes (14) aus den Axialspalt (22) axial überbrückt und dessen anderer radial ausgerichteter L-Schenkel (40) mit seiner Außenfläche gegen den anderen Bund (16) anliegt.

8. Vorrichtung nach einem der Ansprüche 1 bis 6, **dadurch gekennzeichnet, dass** der Stützring (32) oder der Schutzring (34) einen rechteckigen Querschnitt aufweist, dessen eine freie Rechteckseite (38') von der Ringnut (24) des einen Bundes (14) aus den Axialspalt (22) axial überbrückt und dessen andere freie Rechteckseite (40') radial ausgerichtet ist und gegen den anderen Bund (16) anliegt.

9. Vorrichtung nach einem der Ansprüche 1 bis 8, **dadurch gekennzeichnet, dass** die Ringnut (24) einen trapezförmigen Querschnitt aufweist.

10. Vorrichtung nach einem der Ansprüche 1 bis 9, **dadurch gekennzeichnet, dass** die Ringnut (24) so dimensioniert ist, dass sie bei maximaler Verpressung vom verformten Dichtelement (18) ausgefüllt ist.

11. Vorrichtung nach einem der Ansprüche 1 bis 13, **dadurch gekennzeichnet, dass** der Axialspalt (22) eine nach Maßgabe der Spannkraft, der Spannvorrichtung und/oder der gegenseitigen Ausrichtung der gekuppelten Rohre (12) variable Spaltweite aufweist.

12. Vorrichtung nach einem der Ansprüche 1 bis 11, **dadurch gekennzeichnet, dass** die maximale Spaltweite des Axialspalts bis zu 40% der Querabmessung des Dichtelements beträgt.

13. Vorrichtung nach einem der Ansprüche 1 bis 12, **dadurch gekennzeichnet, dass** die maximale Spaltweite des Axialspalte (22) bis zu 1/3 der Tiefe der Ringnut (24) beträgt.

14. Vorrichtung nach einem der Ansprüche 1 bis 13, **dadurch gekennzeichnet, dass** die Außenseiten der Bunde (14,16) unter Ausbildung von Keilflächen (42,44) angeschrägt sind, und dass die Spannvorrichtung (20) den Keilflächen (42,44) entsprechend angeschrägte Gegenflächen (46,48) aufweist, wobei die Spannvorrichtung (20) beide Bunde (14,16) über ihren Umfang umgreift und zentriert und die Keilflächen (42,44) gegen die Gegenflächen (46,48) unter dem Einfluss der in Umfangsrichtung gespannten Spannvorrichtung (20) kraftschlüssig anliegen.
